# FASCICULE DE BREVET EUROPEEN

(11) **EP 0 476 481 B1**
(45) Date de publication et mention de la délivrance du brevet: **23.11.1994**
(21) Numéro de dépôt: 91115235.3
(22) Date de dépôt: 10.09.1991
(51) Int. Cl.: G01P 15/10, G01P 1/02, G01D 11/24

(54) **Capteur de mesure d'une grandeur physique**
Sensor für eine physische Grösse
Sensor for a physical parameter

(30) Priorité: 17.09.1990 FR 9011529
(43) Date de publication de la demande: 25.03.1992
(73) Titulaire: ASULAB S.A., CH-2501 Bienne (CH)
(72) Inventeur: Froidevaux, Raymond, CH-2017 Boudry (CH)
(74) Mandataire: de Raemy, Jacques

(56) Documents cités:
- EP-A- 0 247 247
- GB-A- 2 176 607
- MEASUREMENT TECHNIQUES, vol. 22, no. 12, Décembre 1979, New York, US, pages 1469-1471; L.M. MOSKALIK: "Tensometric accelerometers with overload protection"

## Description

L'invention concerne les capteurs de mesure de grandeurs physiques.

Plus particulièrement, elle concerne un capteur du type comportant un support qui est élastiquement déformable sous l'effet d'une sollicitation extérieure, telle qu'une accélération, et qui est destiné à recevoir des moyens de détection sensibles à cette sollicitation.

On connaît déjà des capteurs équipés de tels supports déformables. Les capteurs de ce type sont utilisés depuis longtemps dans des instruments de mesure de force tels que des balances, ou dans des instruments de mesure d'autres grandeurs physiques, telles que des pressions ou des accélérations. Ces dernières applications se sont d'ailleurs révélées très intéressantes dans le domaine de l'automobile où l'on dispose des capteurs à des endroits appropriés, dans un véhicule, pour mesurer les accélérations subies par celui-ci et modifier en conséquence certains paramètres, voire faire intervenir différents dispositifs de sécurité.

Sous leur forme la plus simple, ces capteurs comprennent un support déformable ayant la forme générale d'une poutre de section rectangulaire, fixée en porte-à-faux sur un bâti. Ce support déformable qui est prévu pour fléchir selon au moins un axe sensible sous l'action de la sollicitation extérieure, comporte un transducteur. Ce transducteur est fixé sur une grande face du support déformable, à égale distance de l'une ou de l'autre de ses extrémités. Ainsi, lorsque la poutre se déforme, le transducteur, qui est par exemple constitué par un résonateur à quartz en forme de double diapason, envoie des informations sous la forme de variations de fréquences, vers un circuit de traitement. Pour diminuer des effets parasites (températures), on utilise souvent un ou plusieurs autres transducteurs.

Toutefois, dans ce type de capteur, le support, avant son montage sur le bâti, est déjà muni de ses transducteurs. Ces derniers sont fixés rigidement sur le support pour obtenir une sensibilité maximum dès la moindre déformation du support si bien que, dans le cas de transducteurs à quartz, les opérations de manipulation avant et lors du montage entraînent fréquemment la rupture des transducteurs, et ce en raison de leur extrême fragilité.

On comprend donc que ce risque de détérioration entraîne la nécessité de mettre sur pied des étapes de contrôle supplémentaires destinées à éviter le montage de capteurs défectueux dans leur bâti respectif. Qui plus est, ces déteriorations ne sont pas facilement détectables à l'oeil nu et nécessitent l'utilisation d'instruments de contrôle.

Il est à noter que de telles étapes de contrôle sont d'autant plus indispensables que ces capteurs sont généralement destinés à équiper des véhicules automobiles ou tout autre engin de transport de passagers dans lesquels ils donnent une information pouvant avoir une incidence directe sur la sécurité de ces passagers.

L'invention a donc pour but de remédier à cet inconvénient en fournissant un capteur de mesure d'une grandeur physique susceptible d'être manipulé lors de ses opérations de montage sans risquer la déterioration des transducteurs montés sur celui-ci.

A cet effet, l'invention a pour objet un capteur de mesure d'une grandeur physique, du type comprenant :
- un bâti,
- au moins un support, ledit support comportant une base destinée à être montée sur ledit bâti et à partir de laquelle s'étend un organe allongé apte à se déformer par rapport à la base sous l'action de ladite grandeur physique,
- une masse solidaire de l'organe allongé ledit bâti comprenant une cavité entourant étroitement la masse,
- des moyens de détection solidaires dudit organe allongé aptes à fournir un signal représentatif de ladite grandeur physique. Un tel capteur est divulgé par le document GB-A-2 176 607. Le capteur selon l'invention comporte de plus
- des moyens de limitation de la déformation dudit organe allongé, notamment avant son montage sur le bâti, les moyens de limitation comprenant au moins un bras solidaire de la base et s'étendant parallèlement au voisinage de l'organe allongé, la partie extrême dudit bras s'étendant en outre dans un espace ménagé dans ladite masse.

Grâce à ces caractéristiques, la déformation du support est avantageusement contrôlée par le bras et la masse qui limitent la déformation de l'organe allongé, et par conséquent limitent la sollicitation des moyens de détection qu'il comporte, jusqu'à un seuil de résistance à la rupture prédéterminé, sans augmenter considérablement l'encombrement du capteur.

Selon un mode de réalisation, l'organe allongé est formé par une poutre en porte-à-faux s'étendant à partir de la base et ladite masse est formée de deux parties assemblées entre lesquelles est ménagé un espace dans lequel s'étend ledit bras, cet espace définissant l'amplitude de déformation maximale dudit organe allongé.

L'invention a également pour objet un capteur tel que défini à la revendication 8.

D'autres caractéristiques et avantages de la présente invention apparaîtront à la lumière de la description détaillée qui suit, de deux modes de réalisation de l'invention donnés à titre d'exemple non limitatifs, en liaison avec les dessins annexés dans lesquels :
- la figure 1 est une vue en perspective éclatée d'un capteur de mesure selon l'invention,

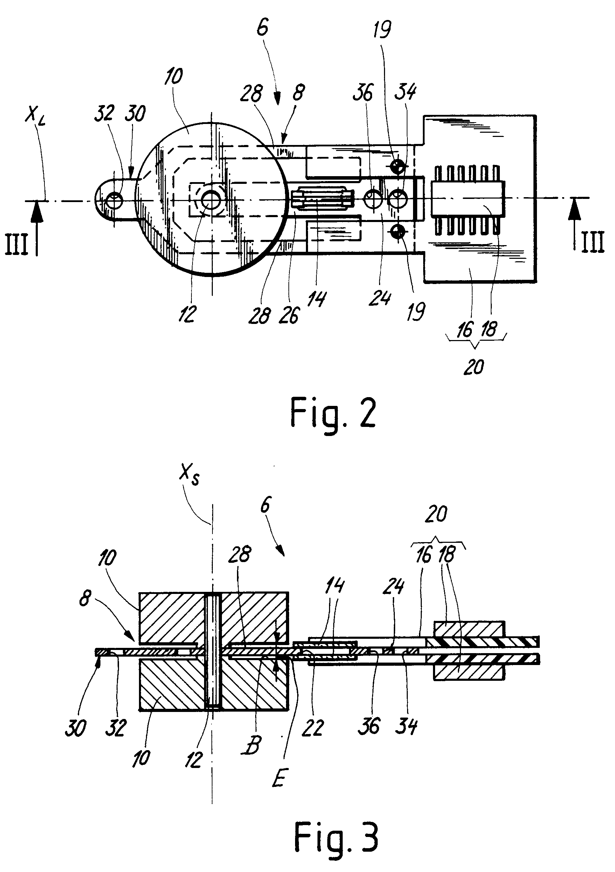

- la figure 2 est une vue de dessus du support du capteur de la figure 1, muni de différents organes fonctionnels et prêt à être monté sur le bâti,
- la figure 3 est une vue en coupe faite selon la ligne III-III de la figure 2,
- la figure 4 représente un deuxième mode de réalisation des moyens de butée et de contre-butée du capteur selon l'invention,
- la figure 5 est une vue en coupe faite selon la ligne V-V de la figure 4,
- la figure 6 est une vue similaire à la figure 4, mais représentant un troisième mode de réalisation des moyens de butée et de contre-butée du capteur selon l'invention, et
- la figure 7 est une vue en coupe faite selon la ligne VII-VII de la figure 6.

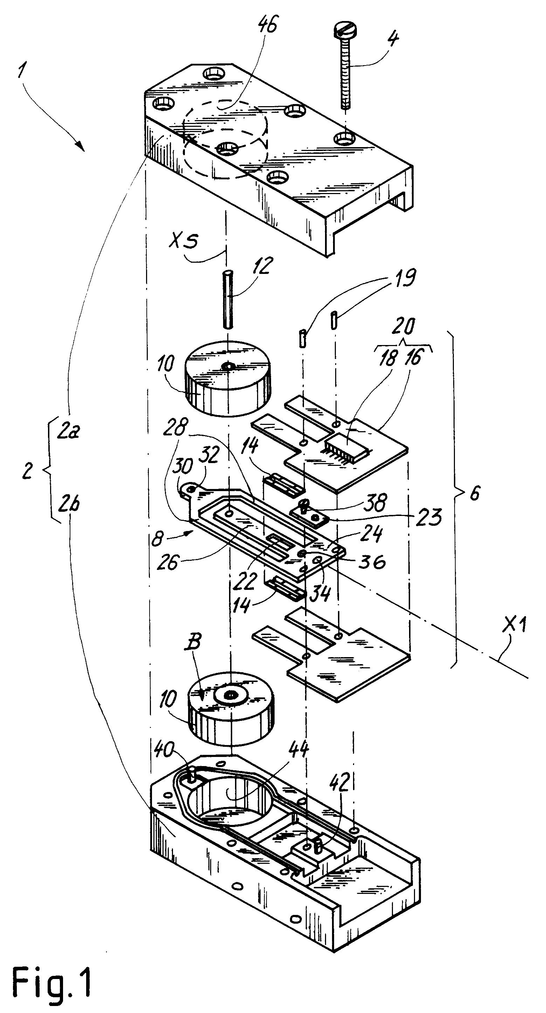

En se référant tout d'abord à la figure 1, on voit un mode de réalisation préféré du capteur de mesure selon l'invention, désigné par la référence numérique générale 1.

Ce capteur 1 comporte un bâti 2 qui est constitué de deux coques respectivement 2a et 2b ayant une forme similaire et destiné à être assemblées par l'intermédiaire de moyens de fixation, tel que des vis 4, dont une seule a été représentée sur la figure 1.

Le bâti 2 est conformé pour recevoir une unité fonctionnelle 6.

Cette unité fonctionnelle 6 comprend un support 8 dont une partie au moins est élastiquement déformable sous l'action d'une grandeur physique à capter ou à mesurer.

Dans cet exemple particulier, deux demi-masses 10, reliées entre elles par un axe 12 chassé dans celles-ci, sont montées sur le support 8. L'axe 12 traverse de part en part le support 8 si bien que ce support est pris en sandwich entre les deux demi-masses 10.

De plus, le support 8 comporte deux moyens de détection 14. Dans l'exemple représenté, les moyens de détections sont constitués par deux résonateurs à quartz en forme de double diapason montés de part et d'autre du support 8. Chaque résonateur 14 est relié électriquement à une plaque de circuits imprimés associée 16 sur laquelle sont montés en surface des composants électroniques 18, dont un seul a été ici représenté. Les éléments 16 et 18 constituent un circuit électronique 20.

De façon connue en soi, les résonateurs 14 sont connectés à des circuits oscillants, non référencés, dont les fréquences de résonances varient en fonction de la déformation des résonateurs et par conséquent en fonction de la déformation du support 8. Les circuits résonants délivrent des signaux qui sont traités et analysés dans le circuit électronique 20. Celui-ci délivre un signal variable en fonction de la déformation du support 8 et donc, dans cet exemple, de l'accélération subie par les deux demi-masses 10.

Dans cet exemple de réalisation, on a donc prévu deux plaques de circuit imprimé 16 disposées de part et d'autre du support 8 et fixées sur celui-ci par l'intermédiaire de tenons chassés 19 ou d'autres moyens analogues, tels que des vis, non représentées.

Il est en outre à noter qu'à l'endroit où sont montés les résonateurs 14, le support 8 comporte sous chacun de ses moyens de détection ou résonateur 14 une ouverture traversante 22 permettant au résonateur 14 de vibrer librement.

Dans cet exemple particulier, le support 8 comporte une base 24 qui est destinée à être fixée mécaniquement sur le bâti 2. A partir de cette base 24 s'étend un organe 26 de forme générale allongée qui est particulièrement apte à se déformer élastiquement par rapport à la base 24. Cet organe allongé a la forme générale d'une poutre de section rectangulaire fixée, dans l'exemple représenté, en porte-à-faux sur le bâti 2. Cette poutre est prévue pour fléchir de façon sensible dans une direction perpendiculaire à ses grandes faces, sous l'action d'une sollicition extérieure, et ce suivant un axe sensible Xs pour solliciter les moyens de détection 14.

Dans ce mode de réalisation, le capteur de mesure 1 et plus particulièrement le support 8, comporte deux bras 28 qui sont reliés entre eux pour former un cadre fermé autour de l'organe allongé ou poutre 26.

Les deux bras 28 s'étendent dans une direction sensiblement parallèle à celle de l'organe allongé 26 à partir de la base 24 et au-delà de l'extrémité libre de l'organe allongé 26.

Les deux bras 28 sont donc reliés entre eux au-delà de l'extrémité libre de l'organe allongé 26 par l'intermédiaire d'une partie de jonction 30 dans laquelle est ménagé un orifice de positionnement 32.

On précisera ici que la base 24, l'organe allongé 26, les deux bras 28, ainsi que la partie de jonction 30 sont tous ménagés dans un même plan pour former un organe unitaire et constituer le support 8 de sorte que de dernier peut être avantageusement réalisé à partir d'une feuille de métal étampée. Le support 8 peut être ainsi réalisé en grandes séries par des opérations simples et à un prix de revient peu élevé.

On notera que l'opération d'étampage nécessaire à cette fabrication ne requiert aucune étape supplémentaire pour la réalisation du support 8 muni de l'organe allongé et du cadre formé par la base 24, de la partie de jonction 30 et des deux bras 28.

La base 24 comprend également un orifice de positionnement 34 qui est situé, comme l'orifice de positionnement 32, sur un axe longitudinal Xl de la poutre 26, dit axe de positionnement. Avantageusement, les deux orifices de positionnement respectivement 32 et 34 sont situés l'un par rapport à l'autre de façon la plus éloignée possible pour assurer un bon positionnement du cadre formé par les bras 28 et donc du support 8 dans le bâti 2. La base 24 comporte également un orifice de passage 36 conformé pour recevoir une vis 38 de fixation du support sur la coque inférieure 2b du bâti 2. Entre la vis 38 et la base 24 est interposée une bride 23 qui est maintenue en appui sur la base 24 pour coïncider avec le bord duquel fait saillie l'organe allongé ou poutre 26.

Les deux orifices de positionnement 32 et 34 sont conformés pour pouvoir coopérer respectivement avec des tenons 40 et 42 conformés pour s'ajuster précisément dans les coques supérieure et inférieure 2a et 2b.

Les moyens de positionnement 32, 34, 40 et 42 permettent d'ajuster avec un jeu déterminé les deux demi-masses 10 à l'intérieur de deux cavités 44 et 46 ménagées respectivement dans les coques 2b et 2a.

On remarquera donc que les deux demi-masses 10 constituent une masse entière de deux parties assemblées par un axe 12, entre lesquelles est ménagé un espace E dans lequel s'étendent partiellement les deux bras 28. Cet espace E définit de part et d'autre des bras 28, et entre chacun de ceux-ci et les deux demi-masses 10, un jeu déterminant l'amplitude de déformation maximale de l'organe allongé 26.

Ainsi, on comprend bien que l'unité fonctionnelle 6 avant son montage dans le bâti 2 est protégée contre les déformations intempestives que peut subir l'organe allongé 26 et qui de nature à entraîner la détérioration ou la rupture des résonateurs 14, puisque l'amplitude de déformation de l'organe allongé 26 est limitée à un seuil prédéterminé par le contact mécanique entre les faces en regard, respectivement des demi-masses 10 et des bras 28 formant respectivement butée et contre-butée.

Ainsi, les moyens de butée sont formés par les deux demi-masses 10 qui sont solidaires de l'organe allongé 26.

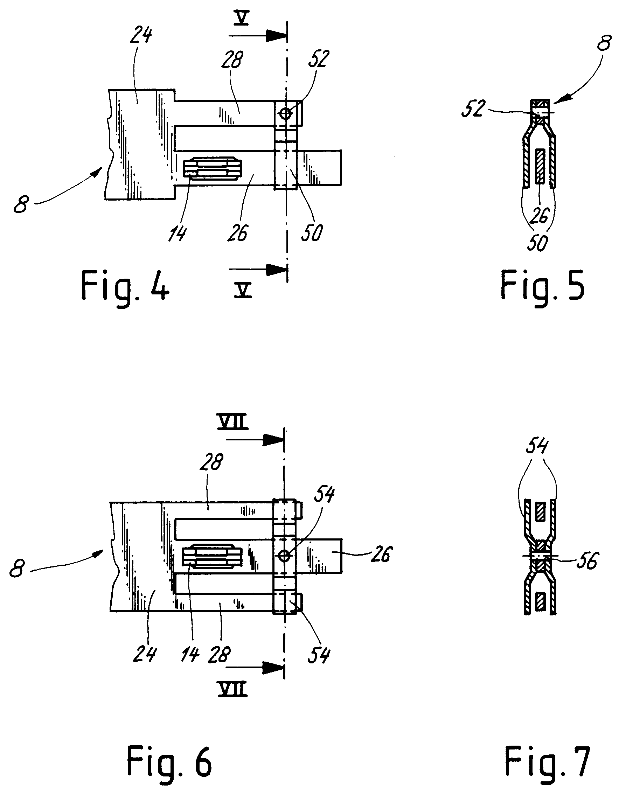

En se référant désormais aux figures 4 à 7, on voit deux modes de réalisation d'un support 8 selon l'invention dans lesquels on a désigné les éléments identiques à ceux décrits précédemment par les mêmes références numériques.

En se référant tout particulièrement aux figures 4 et 5, le support 8 comprend un seul bras 28 qui comporte deux ailes 50 s'étendant à partir de ce dernier et qui sont rapportées sur ce bras par l'intermédiaire d'une goupille chassée 52, le tout étant fixé mécaniquement à l'extrémité libre du bras 28. Les deux ailes 50 s'étendent dans des plans sensiblement parallèles à celui de l'organe allongé 26, dans une direction perpendiculaire à celui-ci et en regard de cet organe allongé pour limiter son déplacement selon deux sens, lors de sa déformation. Ainsi, l'organe allongé 26 et les deux ailes 50 forment respectivement butée et contre-butée.

Bien évidemment, dans un mode de réalisation encore plus simplifié, on pourraît ne disposer qu'une seule aile qui limiterait la course de l'organe allongé 26 dans une seule direction. Dans une autre variante, là ou lesdites ailes viennent de matière avec le bras 28 et sont ménagées sur celui-ci par étampage, puis repliées de façon appropriée.

En se référant maintenant aux figures 6 et 7, l'organe allongé 26 comprend deux extensions 54 qui sont rapportées par l'intermédiaire d'une goupille chassée 56 au voisinage de l'extrémité libre de l'organe allongé 26 et deux bras 28 qui sont solidaires de la base 24 s'étendent partiellement entre les ailes 54.

Dans un mode de réalisation simplifié, on dispose une seule extension 54 limitant le débattement de la poutre 10 dans une seule direction.

Dans un autre mode de réalisation, la ou les extensions viennent de matière avec la poutre 26 et sont repliées de façon appropriée pour s'étendre en regard du ou des bras 28.

On notera là encore que les extensions 54 constituent des moyens de butée, tandis que les bras 28 forment des moyens de contre-butée associés.

Il ressort de tous ces modes de réalisation que les moyens de butée et de contre-butée sont solidaires du support 8 et sont mécaniquement indépendants du bâti 2, si bien que les moyens de butée et de contre-butée limitent la déformation du support 8 avant son montage sur le bâti 2. Par conséquent les moyens de détection 14 peuvent être protégés de façon efficace lors de manipulations qui sont préalables aux opérations de montage de l'unité fonctionnelle 6 dans son bâti 2.

## Revendications

1. Capteur de mesure d'une grandeur physique du type comprenant :
- un bâti (2),
- au moins un support (8), ledit support comportant une base (24) destinée à être montée sur ledit bâti (2) et à partir de laquelle s'étend un organe allongé (26) apte à se déformer par rapport à la base (24) sous l'action de ladite grandeur physique,
- une masse (10) solidaire de l'organe allongé, ledit bâti (2) comprenant une cavité (44) entourant étroitement la masse (10),
- des moyens de détection (14) solidaires dudit organe allongé (26) aptes à fournir un signal représentatif de ladite grandeur physique et,
- des moyens de limitation de la déformation dudit organe allongé (26), notamment avant son montage sur le bâti (2), caractérisé en ce que les moyens de limitation comprennent au moins un bras (28) solidaire de la base (24) et s'étendant parallèlement au voisinage de l'organe allongé (26), la partie extrême dudit bras s'étendant en outre dans un espace ménagé dans ladite masse.

2. Capteur de mesure selon la revendication 1, caractérisé en ce que l'organe allongé (26) est formé par une poutre en porte-à-faux s'étendant à partir de la base (24) et en ce que ladite masse (10) est formée de deux parties assemblées entre lesquelles est ménagé un espace (e) dans lequel s'étend ledit bras (28), cet espace (e) définissant l'amplitude de déformation maximale dudit organe allongé (26).

3. Capteur de mesure selon la revendication 2, caractérisé en ce qu'il comporte deux bras (28) reliés entre eux par une partie de jonction (30) pour former un cadre fermé autour de l'organe allongé (26).

4. Capteur de mesure selon la revendication 3, caractérisé en ce que la partie de jonction (30) est sensiblement circonscrite dans la masse (10).

5. Capteur de mesure selon l'une quelconque des revendications précédentes, caractérisé en ce qu'une extrémité d'un bras (28) qui fait saillie au-delà de la masse (10) comporte un orifice de positionnement sur le bâti (2).

6. Capteur de mesure selon l'une quelconque des revendications précédentes, caractérisé en ce que les bras (28) viennent de matière avec ladite base (24).

7. Capteur de mesure selon l'une quelconque des revendications précédentes, caractérisé en ce que le support (8) est réalisé à partir d'une feuille de métal étampée.

8. Capteur de mesure d'une grandeur physique du type comprenant:
- un bâti (2),
- au moins un support (8) ledit support comportant une base (24) destinée à être montée sur ledit bâti (2) et à partir de laquelle s'étend un organe (26) allongé apte à se déformer par rapport à la base (24) sous l'action de ladite grandeur physique,
- des moyens de détection solidaires du dudit organe allongé apte à fournir un signal représentatif de ladite grandeur physique et,
- des moyens de limitation de la déformation dudit organe allongé (26) caractérisé en ce que lesdits moyens de limitation comprennent au moins un bras solidaire de la base, ledit bras s'étendant parallèlement au voisinage de l'organe allongé et comprenant au moins une aile (50) qui s'étend à partir de celui-ci, ladite aile (50) venant de matière avec ledit bras ou étant rapportée sur celui-ci.

9. Capteur de mesure selon la revendication 8, caractérisé en ce qu'il comporte deux ailes (59) s'étendant de part et d'autre et en regard de l'organe allongé (26) pour limiter sa déformation selon deux sens de déplacement.

10. Capteur de mesure selon la revendication 8, caractérisé en ce que ledit organe allongé (26) comprend au moins une extension (54) venant de matière ou qui est rapportée sous ledit organe (26) ladite extension s'étendant en regard dudit bras (28).

## Patentansprüche

1. Meßsensor einer physikalischen Größe der Bauart, welche umfaßt:
- einen Rahmen (2),
- mindestens einen Support (8), der eine Basis (24) umfaßt, welche an dem Rahmen (2) montierbar ist und von der ausgehend sich ein langgestrecktes Organ (26) erstreckt, das relativ zu der Basis (24) unter der Wirkung der genannten physikalischen Größe deformierbar ist,
- eine mit dem langgestreckten Organ verbundene Masse (10), wobei der Rahmen (2) einen die Masse (10) dicht umschließenden Hohlraum (44) umfaßt,
- Erfassungsmittel (14), die mit dem langgestreckten Organ (26) verbunden sind zum Liefern eines für die genannte physikalische Größe repräsentativen Signals, und
- Mittel zum Begrenzen der Deformation des langgestreckten Organs (26), insbesondere vor seiner Montage auf dem Rahmen (2), dadurch gekennzeichnet, daß die Begrenzungsmittel mindestens einen mit der Basis (24) verbundenen und sich parallel benachbart dem langgestreckten Organ (26) erstreckenden Arm (28) umfassen, wobei die extreme Partie des Armes sich im übrigen in einen in die Masse eingearbeiteten Raum erstreckt.

2. Meßsensor nach Anspruch 1, dadurch gekennzeichnet, daß das langgestreckte Organ (26) von einem Kragträger gebildet ist, der sich von der Basis (24) ausgehend erstreckt, und daß die Masse (10) aus zwei Partien zusammengefügt ist, zwischen denen ein Zwischenraum (e) eingearbeitet ist, in den sich der Arm (28) erstreckt, welcher Zwischenraum (e) die maximale Deformationsamplitude des langgestreckten Organs (26) begrenzt.

3. Meßsensor nach Anspruch 2, dadurch gekennzeichnet, daß er zwei miteinander durch eine Verbindungspartie (30) verbundene Arme (28) umfaßt zur Bildung eines geschlossenen Rahmens um das langgestreckte Organ (26).

4. Meßsensor nach Anspruch 3, dadurch gekennzeichnet, daß die Verbindungspartie (30) im wesentlichen in die Masse (10) eingeschrieben ist.

5. Meßsensor nach einem der vorangehenden Ansprüche, dadurch gekennzeichnet, daß ein Ende eines Armes (28), das über die Masse (10) hinausragt, eine Öffnung für das Positionieren an dem Rahmen (2) umfaßt.

6. Meßsensor nach einem der vorangehenden Ansprüche, dadurch gekennzeichnet, daß die Arme (28) aus dem Material der Basis (24) hervorgehen.

7. Meßsensor nach einem der vorangehenden Ansprüche, dadurch gekennzeichnet, daß der Support (8) ausgehend von einem gestanzten Metallblech hergestellt ist.

8. Meßsensor einer physikalischen Größe der Bauart, welche umfaßt:
- einen Rahmen (2),
- mindestens einen Support (8), der eine Basis (24), welche an dem Rahmen (2) montierbar ist, umfaßt und von der ausgehend sich ein langgestrecktes Organ (26) erstreckt, das sich relativ zu der Basis (24) und unter der Wirkung der genannten physikalischen Größe deformieren kann,
- Erfassungsmittel, die mit dem langgestreckten Organ verbunden sind und ausgebildet sind zum Liefern eines für die genannte physikalische Größe repräsentativen Signals, und
- Mittel zum Begrenzen der Deformation des langgestreckten Organs (26), dadurch gekennzeichnet, daß die Begrenzungsmittel mindestens einen mit der Basis verbundenen Arm umfassen, welcher Arm sich parallel benachbart dem langgestreckten Organ erstreckt, und mindestens einen Flügel (50) umfaßt, der sich von ihm ausgehend erstreckt, welcher Flügel (50) aus dem Material des Armes hervorgeht oder an demselben befestigt ist.

9. Meßsensor nach Anspruch 8, dadurch gekennzeichnet, daß er zwei Flügel (59) umfaßt, die sich beidseits gegenüber dem langgestreckten Organ (26) erstrecken zum Begrenzen seiner Deformation in zwei Verlagerungsrichtungen.

10. Meßsensor nach Anspruch 8, dadurch gekennzeichnet, daß das langgestreckte Organ (26) mindestens einen Fortsatz (54) aufweist, der aus seinem Material hervorgeht oder an dem Organ (26) befestigt ist, welcher Fortsatz sich gegenüber dem Arm (28) erstreckt.

## Claims

1. Measurement sensor for measuring a physical parameter of the type comprising :
- a frame (2),
- at least one support (8), said support having a base (24) adapted to be mounted on said frame (2) and from which extends an elongated member (26) capable of flexing in relation to the base (24) under the action of said physical parameter,
- a mass (10) fixed to the elongated member, said frame (2) comprising a cavity (44) closely surrounding the mass (10),
- detection means (14) integral with said elongated member (26) capable of supplying a signal representative of said physical parameter, and
- means for limiting the flexion of said elongated member (26), before its mounting on the frame (2), characterized in that the limiting means comprise at least one arm (28) integral with the base (24) and extending parallel to and adjacent to the elongated member (26), the extremity of said arm also extending into a space provided in said mass.

2. Measurement sensor according to claim 1, characterized in that the elongated member (26) is formed by an overhanging beam extending from the base (24) and in that said mass (10) is formed by two assembled parts between which a space (e) is provided into which said arm (28) extends, this space (e) defining the amplitude of maximum flexion of said elongated member (26).

3. Measurement sensor according to claim 2, characterized in that it comprises two arms (28) connected together by a junction piece (30) to form a closed frame about the elongated member (26).

4. Measurement sensor according to Claim 3, characterized in that the junction piece (30) is substantially enclosed within the mass (10).

5. Measurement sensor according to any one of the preceding claims, characterized in that one extremity of one arm (28) which projects beyond the mass (10) has a positioning orifice on the frame (2).

6. Measurement sensor according to any one of the preceding claims, characterized in that the arms (28) are of the same material as said base (24).

7. Measurement sensor according to any one of the preceding claims, characterized in that the support (8) is made from a stamped metal sheet.

8. Measurement sensor of a physical parameter of the type comprising :
- a frame (2),
- at least one support (8), said support having a base (24) adapted to be mounted on said frame (2) and from which extends an elongated member (26) capable of flexing in relation to the base (24) under the action of said physical parameter,
- detection means integral with said elongated member adapted to provide a signal representative of said physical parameter, and
- means for limiting the flexion of said elongated member (26), characterized in that said limitation means comprise at least one arm integral with the base, said arm extending parallel to and adjacent to the elongated member and comprising at least one wing (50) which extends therefrom, said wing (50) being integral with said arm

9. Measurement sensor according to claim 8, characterized in that it has two wings (59) extending on either side and opposite the elongated member (26) to limit its flexion in both directions of displacement.

10. Measurement sensor according to claim 8, characterized in that said elongated member (26) comprises at least one extension (54) integral therewith or which is located under said member (26), said extension extending opposite said arm (28).
